# EUROPÄISCHE PATENTSCHRIFT

(11) **EP 2 129 965 B1**
(45) Veröffentlichungstag und Bekanntmachung des Hinweises auf die Patenterteilung: **03.08.2011**
(21) Anmeldenummer: 07727709.3
(22) Anmeldetag: 03.04.2007
(51) Int. Cl.: F21V 29/02, H01J 61/52

(54) **LAMPENANORDNUNG MIT KÜHLEINRICHTUNG**
LAMP ARRANGEMENT WITH A COOLING DEVICE
SYSTÈME DE LAMPE POURVU D'UN DISPOSITIF DE REFROIDISSEMENT

(43) Veröffentlichungstag der Anmeldung: 09.12.2009
(73) Patentinhaber: OSRAM Gesellschaft mit beschränkter Haftung, 81543 München (DE)
(72) Erfinder: NAUEN, André, 21502 Suzhou, Jiangzu (CN); LANKES, Simon, 14612 Falkensee (DE)
(86) Internationale Anmeldenummer: PCT/EP2007/053238
(87) Internationale Veröffentlichungsnummer: WO 2008/119391

(56) Entgegenhaltungen:
- EP-A- 1 705 423
- WO-A-2004/008482
- WO-A-2004/100211
- DE-C- 707 528

## Beschreibung

### Technisches Gebiet

Die Erfindung geht von einer Lampenanordnung mit Kühleinrichtung aus, die insbesondere für Hochdruckentladungslampen, stärker bevorzugt Projektorlampen, nutzbar ist.

### Stand der Technik

Höchstdruckgasentladungslampen, wie sie beispielsweise in der Videoprojektion eingesetzt werden, erfordern eine präzise Kühlung, um die spezifizierte Lebensdauer sicherzustellen. Insbesondere zeigt sich, dass die Temperaturen an der Außenseite des Brennergefäßes innerhalb eines lampenspezifischen Temperaturintervalls liegen müssen, d.h., dass sowohl zu hohe, als auch zu niedrige Temperaturen unbedingt vermieden werden müssen. Aufgrund der Konvektion der Füllgase im Entladungsgefäß entstehen dabei ein höherer Kühlbedarf an der Oberseite des Entladungsgefäßes und ein deutlich geringerer Kühlbedarf an seiner Unterseite.

Im Allgemeinen werden Videoprojektoren in zwei Einbaulagen betrieben, die zueinander um 180° versetzt sind. Die Wahl der Einbaulage hängt davon ab, ob der Videoprojektor auf einer ebenen Fläche steht oder hängend montiert ist. Die Lampen werden dabei entsprechend mitgedreht. In beiden Einbaulagen müssen die vorgegebenen Temperaturen an der Außenseite des Entladungsgefäßes eingehalten werden.

In der Offenlegungsschrift DE 101 00 724 A1 wird eine Kühlung mittels einer im Lampenreflektor angeordneten Düse beschrieben. Dieses erlaubt die präzise Kühlung der thermisch am stärksten belasteten Oberseite des Entladungsgefäßes. Gleichzeitig ist die Kühlwirkung auf der thermisch wenig belastete Unterseite stark reduziert, so dass die für einen zuverlässigen Betrieb benötigten Minimaltemperaturen eingehalten werden können. Aufgrund der bei einer Drehung um 180° nicht symmetrischen Anordnung der Kühleinrichtung ist jedoch eine entsprechende Änderung der Einbaulage nicht realisierbar.

Eine Lösung, wie diese im Patent US 2006/0226752 A1 dargestellt ist, realisiert zwar eine rotationssymmetrisch aufgebaute Kühlung. Es ist jedoch keine Anpassung der Kühlung an die natürliche Temperaturverteilung der Höchstdruckentladungslichtquelle möglich. Beispielsweise würde eine Einstellung des Kühlluftstromes, die auf der Oberseite des Entladungskolbens eine im Hinblick auf die Entglasungsneigung günstige Temperatur zur Folge hat, auf der Unterseite eine Temperatur herbeiführen, die für das Funktionieren des kritischen Kreisprozesses ungünstig ist.

Im Betrieb einer Höchstdruckgasentladungslampe besteht immer eine gewisse Berstwahrscheinlichkeit. Beispielsweise wird in der Schrift JP 2001-307535A die Ausführung einer Reflektorhöchstdruckgasentladungslampe beschrieben, die das Austreten von Bruchstücken im Fall des Berstens des Entladungsgefäßes verhindert. Das Lampensystem ist in diesem Fall jedoch nicht vollkommen geschlossen, so dass gasförmige Teile der Füllung der Entladungslampe austreten können.

Die Schrift DE 707 528 C offenbart eine Lampenanordnung mit einer Kühleinrichtung. Die Lampenanordnung weist ein Reflektorgehäuse und eine darin angeordnete Lampe auf. Das Reflektorgehäuse weist eine Kühlfluideinlassausnehmung und eine Kühlfluidauslassausnehmung auf, durch die das Kühlfluid zur Kühlung der Lampe geleitet wird.

Die Schrift EP 1 705 423 A offenbart eine Kühleinrichtung für eine Hochdruck-Entladungslampe mit einer Kühlfluideinlassausnehmung und einer Kühlfluidauslassausnehmung.

Die Schrift WO 2004/008482 A offenbart eine Reflektorlampe mit einer Kühleinrichtung. Zur Steigerung der Kühlleistung sind die Kühlfluideinlassausnehmungen benachbart zu der Ausnehmung im Reflektorgehäuse für die Lampe positioniert.

Die Schrift WO 2004/100211 A offenbart ebenfalls eine Reflektorlampe mit einer Kühleinrichtung. Zur Steigerung der Kühlleistung sind die Kühlfluideinlassausnehmungen direkt innerhalb der Ausnehmung im Reflektorgehäuse für die Lampe positioniert.

### Darstellung der Erfindung

Die Aufgabe der vorliegenden Erfindung ist es, eine Lampenanordnung mit Kühleinrichtung vorzusehen, bei der eine effiziente Kühlung, insbesondere von Hochdruckentladungslampen, insbesondere bei Sicherstellung von zwei Einbaulagen, die um 180°C versetzt sind, ermöglicht wird.

Diese Aufgabe wird durch den Gegenstand des Patentanspruchs 1 gelöst.

Besonders vorteilhafte Ausgestaltungen finden sich in den abhängigen Ansprüchen.

Es wird eine Lampenanordnung mit Kühleinrichtung offenbart, die ein Reflektorgehäuse und ein durch eine Ausnehmung im Reflektorgehäuse verlaufendes und mittels der Kühleinrichtung gekühltes Lampengefäß einer Lampe aufweist. Die Kühleinrichtung hat eine Kühlfluideinlassausnehmung und eine Kühlfluidauslassausnehmung, die an den entgegengesetzten Endabschnitten des Lampengefäßes innerhalb oder benachbart zu der Ausnehmung in dem Reflektorgehäuse vorgesehen sind. Da auf diese Weise das Kühlfluid mit hoher Geschwindigkeit durch den oberen Einlass eintreten und direkt benachbart zum unteren Auslass mit hoher Geschwindigkeit austreten kann, ist ein gewünschtes Kühlverhalten mit geringem Aufwand umsetzbar. Ferner ergibt sich dadurch die Möglichkeit der Anordnung des Lampengefäßes um 180° versetzt in Bezug auf die Lampenachse. Bei einer Lageänderung der Lampenanordnung in einem Projektor, beispielsweise von stehendem Projektor zu hängendem Projektor, kann somit die Rolle der Einström- und Absaugöffnung getauscht werden, so dass die stärkere Kühlwirkung unverändert an der thermisch stärker belasteten Oberseite des Lampengefäßes zur Verfügung steht.

Außerdem weist erfindungsgemäß der Querschnitt der Kühlfluideinlassausnehmung und der Kühlfluidauslassausnehmung jeweils die Form eines Ringabschnitts auf.

In einer bevorzugten Ausführung erstreckt sich jeder Ringabschnitt in einem Winkel von ungefähr 180° um das Lampengefäß. Auf diese Weise kann eine gleichmäßige Kühlwirkung bei Aufrechterhaltung der notwendigen Temperaturen an der Unterseite des Lampengefäßes umgesetzt werden.

Es ist vorteilhaft, wenn die Kühlfluideinlassausnehmung und die Kühlfluidauslassausnehmung außerhalb des Reflektorgehäuses über eine Pumpe miteinander verbunden sind. Dadurch lässt sich eine lageunabhängige, gezielte Kühlung des Lampengefäßes umsetzen.

In einer Weiterbildung ist eine zur Ausnehmung im Reflektorgehäuse am entgegengesetzten Endabschnitt des Reflektorgehäuses angeordnete Öffnung durch eine Frontscheibe verschlossen. Damit wird ein geschlossenes System mit E-missionsfreiheit, insbesondere im Hinblick auf flüchtige Bestandteile der Gasfüllung, im Berstfall umgesetzt. Wenn eine beliebige Art von Wärmetauschern hinzugefügt wird, ist das System vollständig gekapselt, so dass neben der Verhinderung von gas- und partikelförmigen Emissionen auch die Geräuschentwicklung reduziert wird. Auch ergibt sich bei geschlossener Ausführung ein vorteilhafter Kühlmittelstrom über das vordere Ende des Lampengefäßes und die dort befindliche Stromzuführung.

In einer Alternative ist der Kühlfluideinlassausnehmung und der Kühlfluidauslassausnehmung außerhalb des Reflektorgehäuses jeweils eine Pumpe zugeordnet. Dabei lässt sich die Rotationsrichtung der Pumpe entsprechend der Einbaulage des Lampengefäßes einstellen. Durch jeweils eine der jeweiligen Pumpe zugeordnete Kühlfalle kann im Fall des Berstens eine Emission von kondensierbaren Bestandteilen weitgehend reduziert werden.

In der Einbaulage ist die Kühlfluideinlassausnehmung bevorzugt oberhalb des Lampengefäßes und die Kühlfluidauslassausnehmung bevorzugt unterhalb des Lampengefäßes angeordnet. Dadurch lässt sich eine gute Kühlwirkung oberhalb des Lampengefäßes mit einer Aufrechterhaltung des Kreisprozesses durch das Vermeiden des Unterschreitens der Mindesttemperatur unterhalb des Lampengefäßes umsetzen.

In einer weiteren Variante haben die Kühlfluideinlassausnehmung und der Kühlfluidauslassausnehmung jeweils eine Düse, um eine beschleunigte Abgabe des Kühlfluids zu ermöglichen. Die Düsen weisen unabhängig vom geschlossenen oder offenen Kühlkreislauf bevorzugt identische Geometrien auf.

Die Lampe ist bevorzugt eine Hochdruckentladungslampe, da aufgrund der Zwangskühlung entsprechend der vorliegenden Erfindung eine Entglasung und damit eine Verringerung der Lebensdauer vermieden werden kann.

### Kurze Beschreibung der Zeichnungen

Im Folgenden soll die Erfindung anhand von zwei Ausführungsbeispielen näher erläutert werden. Die Figuren zeigen:
Fig. 1 eine Prinzipdarstellung einer Lampenanordnung mit Kühleinrichtung entsprechend dem ersten Ausführungsbeispiel,
Fig. 2 eine Prinzipdarstellung einer Lampenanordnung mit Kühleinrichtung entsprechend dem zweiten Ausführungsbeispiel der Erfindung, und
die Fig. 3A, 3B, 3C, 3D eine weitere Lampenanordnung mit Kühleinrichtung, bei der das erste und zweite Ausführungsbeispiel anwendbar sind, in einer Seitenansicht, in einer Hintersicht, in einer Schrägansicht von hinten und als vergrößerter Ausschnitt der Schrägansicht von hinten.

### Bevorzugte Ausführung der Erfindung

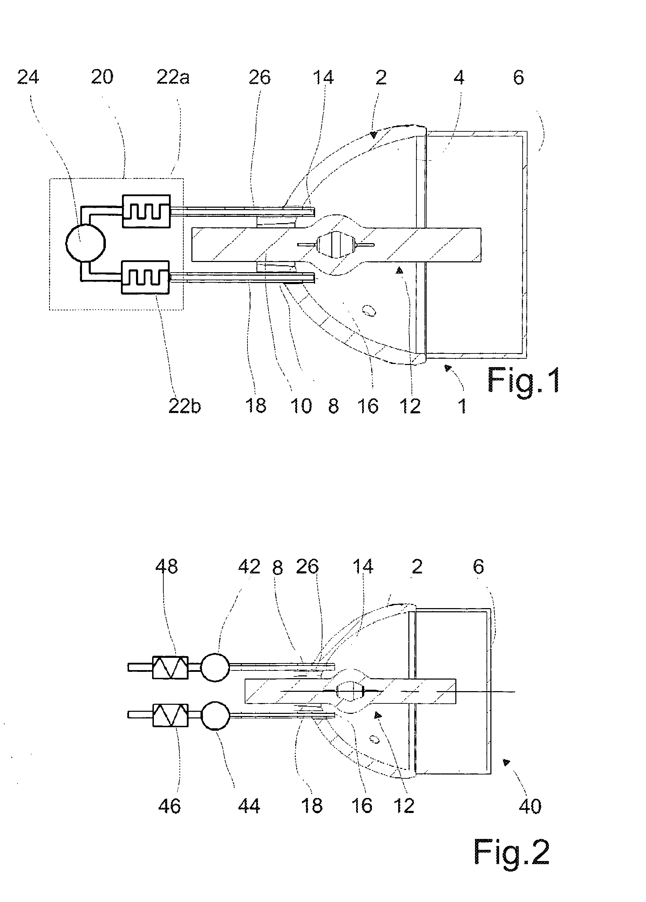

Die Erfinder der vorliegenden Erfindung haben bei ihren Untersuchungen herausgefunden, dass es für eine effektive Zwangskühlung vorteilhaft ist, dass im eingebauten Zustand einer Lampenanordnung an der Kolbenaußenseite eine bestimmte Höchsttemperatur vorliegt, jedoch an der Unterseite Temperaturen unterhalb einer bestimmten Mindesttemperatur nicht wünschenswert sind, da bei Temperaturen unterhalb dieser Mindesttemperatur eine Aufrechterhaltung des Kreisprozesses nicht gewährleistet ist. Zur Umsetzung des genannten Temperaturverlaufes wurden durch die Erfinder das in den Figuren 1 und 2 gezeigte erste und zweite Ausführungsbeispiel entwickelt.

Figur 1 zeigt eine schematische Darstellung der Lampenanordnung 1 entsprechend dem ersten Ausführungsbeispiel. Diese weist ein Reflektorgehäuse 2 auf, dessen lichtabstrahlende Öffnung 4 durch eine Frontscheibe 6 verschlossen ist. Der zur lichtabstrahlenden Öffnung 4 entgegengesetzt liegende Reflektorhals 8 nimmt das rohrartige Lampengefäß 10 der Hochdruckentladungslampe 12 auf. Die äußeren Stromzuführungen, die nachfolgend als Stroze bezeichnet werden, sind in der Prinzipdarstellung aus Figur 1 nicht gezeigt. In der Einbaulage oberhalb des rohrartigen Lampengefäßes 10 ist eine Fluidaustrittsdüse 14 vorgesehen, während unterhalb des rohrartigen Lampengefäßes 10 entgegengesetzt zur Fluidaustrittsdüse 14 eine Fluideintrittsdüse 16 angeordnet ist. Die Fluideintrittsdüse 16 steht über eine Fluidaustrittsausnehmung, die im Hals des Reflektorgehäuses 2 vorgesehen ist, mit einem Kühlkreislauf 20 in Fluidverbindung. Das aus der Fluidaustrittsausnehmung 18 austretende, im Innenraum des Reflektorgehäuses 2 erwärmte Fluid wird durch die Fluideintrittsdüse 16 aufgenommen und über die Fluidaustrittsausnehmung 18 einem Wärmetauscher 22b zugeleitet und dann über eine dem Wärmetauscher 22b nachgeschaltete Pumpe 24, einem weiteren Wärmetauscher 22a und einer Fluideintrittsausnehmung 26 im Reflektorhals 8 der Fluidaustrittsdüse 14 zugeleitet.

Somit wird frisches Kühlfluid auf die Oberseite der Hochdruckentladungslampe eingeblasen und an der Unterseite der Hochdruckentladungslampe abgesaugt. Wenn die Lampe für den Betrieb um 180° gedreht wird, beispielsweise bei einer Lageänderung des Projektors von stehend zu hängend, tauschen die Fluideintrittsdüse 14 und die Fluidaustrittsdüse 16 ihre jeweilige Funktion.

Bei Untersuchungen des Strömungsverhaltens einer Lampenanordnung entsprechend dem ersten Ausführungsbeispiel wurde von den Erfindern festgestellt, dass die Strömung an der Oberseite der Hochdruckentladungslampe 12 schnell und gerichtet ist, während an der Unterseite der Hochdruckentladungslampe hohe Strömungsgeschwindigkeiten nur direkt benachbart zur Fluidaustrittsdüse 16 auftreten. Auf diese Weise kann eine Überkühlung der Brennerunterseite vermieden werden.

Bei der Lampenanordnung 1 entsprechend dem ersten Ausführungsbeispiel kann die Stroz, die sich vom rohrartigen Lampengefäß 10 benachbart zur Frontscheibe 6 hin erstreckt, im Betrieb gekühlt werden, um eine Oxidation der Stroz zu verhindern. Die Kühlwirkung kann erhöht werden, indem die effektive Oberfläche der Stroz vergrößert wird, beispielsweise über ein angebrachtes Plättchen aus Wärme leitendem Material, wie z.B. Metall.

Ferner kann das Strömungsverhalten innerhalb der Lampenanordnung 1 durch eine entsprechende Gestaltung des Reflektorgehäuses in dem optisch nur gering relevanten Bereich benachbart zur Frontscheibe verbessert werden.

Als Fluid für die Kühlung können beim ersten Ausführungsbeispiel beispielsweise Luft oder andere geeignete Gase verwendet werden. Da sich die Fluideintrittsdüse 14 und die Fluidaustrittsdüse 16 in einem Bereich befinden, in dem kein oder nur vernachlässigbar wenig Licht fällt, wird die Lichtausbeute durch ein Kühlsystem entsprechend der vorliegenden Erfindung nur in geringem Maße verringert.

Da bei einer Drehung der Lampe um 180° die Fluideintrittsdüse 14 und die Fluidaustrittsdüse 16 in ihren Funktionen vertauscht werden, ist es notwendig, die Förderichtung der Pumpe zu wechseln, so dass immer durch die oben liegende Düse das Fluid in das Reflektorgehäuse 2 strömt. Zu diesem Zweck ist es vorteilhaft, dass sowohl vor der Pumpe, die bei einem derartigen Wechsel die Förderrichtung ändert, als auch nach der Pumpe ein Wärmetauscher 22a, 22b vorgesehen ist, wie es in Fig. 1 gezeigt ist.

Da es sich bei der Lampenanordnung entsprechend dem ersten Ausführungsbeispiel um ein gekapseltes System handelt, kann selbst bei Verwendung von Quecksilber-Hochdruckentladungslampen die Emission von Quecksilber im Fall des Zerberstens der Hochdruckentladungslampe verhindert werden. Das Quecksilber verbleibt im Kühlkreislauf 20.

Figur 2 zeigt eine Lampenanordnung 40 entsprechend dem zweiten Ausführungsbeispiel. Elemente und Abschnitte, die denen des ersten Ausführungsbeispiels entsprechen, sind mit den gleichen Bezugszeichen versehen.

Im Hals 8 des Reflektorgehäuses 2 der Lampenanordnung 40 des zweiten Ausführungsbeispiels sind ebenfalls eine Fluideintrittsausnehmung 26 und eine Fluidaustrittsdüse 14, sowie eine Fluideintrittsdüse 16 und eine Fluidaustrittsausnehmung 18 vorgesehen.

Im Unterschied zu dem ersten Ausführungsbeispiel ist der Kühlkreislauf der Lampenanordnung 40 des zweiten Ausführungsbeispiels offen. Zu diesem Zweck sind statt der Pumpe 24 des ersten Ausführungsbeispiels jeder der Düsen 14, 16 eine Pumpe 42, 44 zugeordnet. Die der oberen Düse, in Figur 2 der Fluidaustrittsdüse 14, zugeordnete Pumpe 42 drückt kühle Luft in den Reflektor, während die der unteren Düse, in Figur 2 der Fluideintrittsdüse 16, zugeordnete Pumpe 44 die erwärmte Luft absaugt. Es ist vorteilhaft, wenn die zwei Pumpen 42, 44 die gleiche Förderleistung aufweisen.

Wenn die Verwendung der Lampenanordnung 40 um 180° gedreht erfolgt, wird die Förderrichtung der Pumpen 42 und 44 vertauscht. In Figur 2 sind ferner der Pumpe 44 nachgeschaltet eine Kühlfalle 46 und der Pumpe 42 vorgeschaltet eine Kühlfalle 48 angeordnet. Durch derartige Kühlfallen kann sichergestellt werden, dass bei Verwendung von Quecksilber-Hochdruckentladungslampe und einem Zerbersten des Entladungsgefäßes eine weitgehende Kondensation des Quecksilbers erfolgt. Somit wird auch im Falle eines offenen Kühlkreislaufes der Lampenanordnung beim zweiten Ausführungsbeispiel eine erhöhte Betriebssicherheit im Vergleich zum Stand der Technik sichergestellt.

Statt einer Frontscheibe kann bei den Lampenanordnungen des ersten und zweiten Ausführungsbeispiels ein geeigneter optisch durchlässiger Verschluss der vorderen Reflektoröffnung vorgesehen werden.

Die vorstehend beschriebene die Lampenanordnung lässt sich vorteilhaft bei Hochdruckentladungslampen mit einer Haltekeramik verwenden. Wenn eine Kittung des Lampengefäßes erfolgt, lässt sich ein einfacherer und kostengünstigerer Aufbau erzielen.

Bei Lampen ohne Haltekeramik wird der Brenner in den Reflektorhals eingebracht und durch einen hitzeaushärtenden Kitt fixiert. Um die mechanische Stabilität einer derartigen Verbindung nicht herab zu setzen, ist das Einbringen von Fluidaustrittsausnehmung und Fluideintrittsausnehmung zum Kühlen des Lampengefäßes der Hochdruckentladungslampe in diesem Kitt nicht zu empfehlen. Daher besteht die Möglichkeit, Ausnehmungen in Form von Bohrungen im Reflektorgehäuse vorzusehen. Eine derartige Bearbeitung des Reflektorgehäuses ist jedoch häufig kostenintensiv und führt zu Verlusten im Lichtstrom.

Als Alternative für die Fixierung des Lampengefäßes im Reflektorgehäuse ausschließlich durch Kitt ist bei der Lampenanordnung 60 der nachstehenden Variante für das erste und zweite Ausführungsbeispiel die Fixierung mittels einer Hülse 62 vorgenommen. Das Lampengefäß 64 der Hochdruckentladungslampe 66 wird durch die Hülse 62 umschlossen und im Reflektorhals 8 des Reflektorgehäuses 2 durch den Außenumfang der Hülse 62 gehalten.

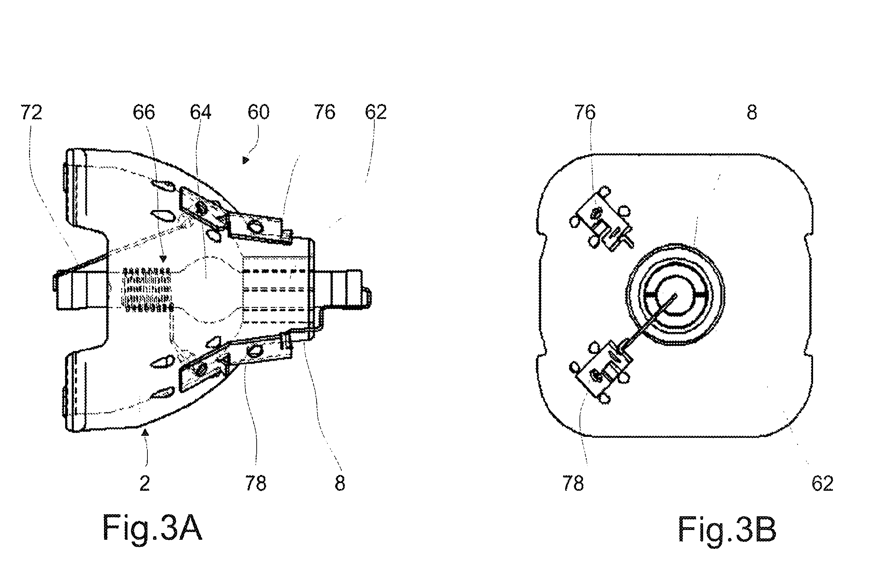

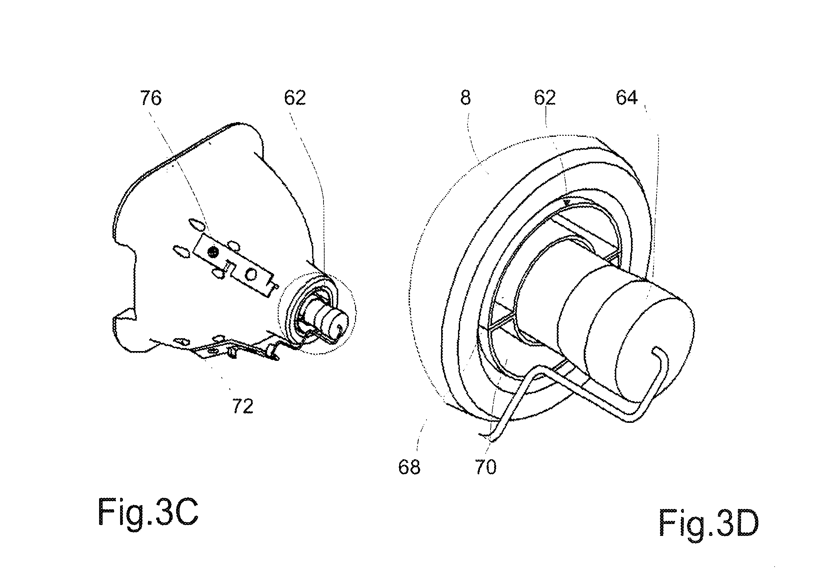

Figur 3A zeigt eine Seitenansicht der Lampenanordnung 60, die Figur 3B eine Hintersicht der Lampenanordnung 60, Figur 3C eine Perspektivansicht von hinten der Lampenanordnung 60 und Figur 3D einen vergrößerten Bereich benachbart zum Reflektorhals 8 bei der Lampenanordnung 60. Aus den Figuren 3B und 3D geht hervor, dass die Hülse 62 eine zylinderförmige Innenausnehmung aufweist und der zwischen der Innenwandung und der Außenwandung begrenzte Innenraum in einer solchen Weise ausgebildet ist, dass sich zwei jeweils im Wesentlichen 180° überstreichende Ringabschnitte ergeben. Der obere Ringabschnitt 68 ist in der Funktion der Fluidaustrittsdüse 14 in den Figuren 1 und 2 vergleichbar, während der untere Ringabschnitt 70 der Fluideintrittsdüse 16 vergleichbar ist. Die Hülse 62 ist bevorzugt metallisch ausgeführt und kann zusätzlich als Antenne für die Zündung des Brenners verwendet werden, in dem dieser mit so genannter in der Druckschrift WO03/085695A1 beschriebener Zündhilfsblase in den Reflektor orientiert verbaut wird.

Die Hülse 62 der Variante entsprechend den Figuren 3A bis 3D hat sowohl eine Haltefunktion in Bezug auf das Lampengefäß 64, als auch die Funktion des Durchtritts des Kühlmittels bzw. des erwärmten Kühlmittels zum Einsatz mit Kühlkreisläufen entsprechend dem ersten bzw. zweiten Ausführungsbeispiels. Auch bei der Variante entsprechend den Figuren 3A bis 3D ist eine Frontscheibe zum Abdecken des Reflektorgehäuses verwendbar.

In Figur 3A ist die Stroz 72 benachbart zum offenen Ende des Reflektorgehäuses 2 gezeigt. Diese wird, wie es in Bezug auf das erste Ausführungsbeispiel beschrieben wurde, durch das Kühlmittel gekühlt. Die äußere Stroz 72 ist mit einem am Reflektorgehäuse 2 vorgesehenem Kontakt 76 verbunden, während eine innere Stroz 74, die sich an den durch den Reflektorhals 8 hindurch tretenden Teil des Lampengefäßes 64 befindet, mit einem Kontakt 78 elektrisch verbunden ist.

Durch die vorliegende Erfindung lässt sich eine effektive Kühlung des Lampengefäßes einer Hochdruckentladungslampe umsetzen, wobei für den Fall des Berstens des Lampengefäßes der Austritt von Bruchstücken oder von Fluiden aus dem Lampengefäß durch die Gestaltung des Kühlkreislaufes verhinderbar ist.

## Patentansprüche

1. Lampenanordnung mit Kühleinrichtung, die aufweist ein Reflektorgehäuse (2) und ein durch eine Ausnehmung im Reflektorgehäuse verlaufendes und mittels der Kühleinrichtung (20) gekühltes Lampengefäß (10) einer Lampe (12), so dass die Kühleinrichtung eine Kühlfluideinlassausnehmung (14) und eine Kühlfluidauslassausnehmung (16) aufweist, die an den entgegengesetzten Endabschnitten des Lampengefäßes (10) innerhalb oder benachbart zu der Ausnehmung in dem Reflektorgehäuse (2) vorgesehen sind, **dadurch gekennzeichnet, dass** der Querschnitt der Kühlfluideinlassausnehmung (14) und der Kühlfluidauslassausnehmung (16) jeweils die Form eines Ringabschnitts aufweist.

2. Lampenanordnung nach Anspruch 1, wobei sich ein jeder Ringabschnitt über einen Winkel von ungefähr 180° um das Lampengefäß (10) erstreckt.

3. Lampenanordnung nach einem der vorhergehenden Ansprüche, wobei die Kühlfluideinlassausnehmung (14) und die Kühlfluidauslassausnehmung (16) außerhalb des Reflektorgehäuses (2) über eine Pumpe (24) und zumindest einen Wärmetauscher (22a, 22b) miteinander verbunden sind.

4. Lampenanordnung nach Anspruch 3, wobei eine zur Ausnehmung im Reflektorgehäuse (2) am entgegengesetzten Endabschnitt des Reflektorgehäuses angeordnete Öffnung (4) durch eine Frontscheibe (6) verschlossen ist.

5. Lampenanordnung nach einem der Ansprüche 1 oder 2, wobei der Kühlfluideinlassausnehmung (14) und der Kühlfluidauslassausnehmung (16) außerhalb des Reflektorgehäuses jeweils eine Pumpe (46, 48) sowie eine jeweilige Kühlfalle zur Kondensation von austretenden Bestandteilen zugeordnet ist.

6. Lampenanordnung nach einem der vorhergehenden Ansprüche, wobei in der Einbaulage die Kühlfluideinlassausnehmung (14) oberhalb des Lampengefäßes und die Kühlfluidauslassausnehmung (16) unterhalb des Lampengefäßes angeordnet sind.

7. Lampenanordnung nach einem der vorhergehenden Ansprüche, wobei die Kühlfluideinlassausnehmung (14) und die Kühlfluidauslassausnehmung (16) jeweils eine Düse (14, 16).

8. Lampenanordnung nach einem der vorhergehenden Ansprüche, wobei die Lampe (12) eine Hochdruck-Entladungslampe ist.

## Claims

1. Lamp arrangement with a cooling device, which has a reflector housing (2) and a lamp vessel (10) of a lamp (12), which lamp vessel passes through a cutout in the reflector housing and is cooled by means of the cooling device (20), with the result that the cooling device has a cooling fluid inlet cutout (14) and a cooling fluid outlet cutout (16), which are provided on the opposite end sections of the lamp vessel (10) within or adjacent to the cutout in the reflector housing (2), **characterized in that** the cross section of the cooling fluid inlet cutout (14) and of the cooling fluid outlet cutout (16) in each case has the shape of a ring section.

2. Lamp arrangement according to Claim 1, wherein each ring section extends around the lamp vessel (10) at an angle of approximately 180°.

3. Lamp arrangement according to one of the preceding claims, wherein the cooling fluid inlet cutout (14) and the cooling fluid outlet cutout (16) are connected to one another outside the reflector housing (2) via a pump (24) and at least one heat exchanger (22a, 22b).

4. Lamp arrangement according to Claim 3, wherein an opening (4), which is arranged at the opposite end section of the reflector housing (2) with respect to the cutout in said reflector housing, is closed by a face plate (6).

5. Lamp arrangement according to either of Claims 1 and 2, wherein the cooling fluid inlet cutout (14) and the cooling fluid outlet cutout (16) outside the reflector housing are each assigned a pump (46, 48) and a respective cold trap for the condensation of emerging constituents.

6. Lamp arrangement according to one of the preceding claims, wherein, in the installed position, the cooling fluid inlet cutout (14) is arranged above the lamp vessel and the cooling fluid outlet cutout (16) is arranged below the lamp vessel.

7. Lamp arrangement according to one of the preceding claims, wherein the cooling fluid inlet cutout (14) and the cooling fluid outlet cutout (16) each have a nozzle (14, 16).

8. Lamp arrangement according to one of the preceding claims, wherein the lamp (12) is a high-pressure discharge lamp.

## Revendications

1. Système de lampe pourvu d'un dispositif de refroidissement, qui présente un boîtier de réflecteur (2) et un récipient de lampe (10), passant par un évidement dans le boîtier de réflecteur et refroidi au moyen du système refroidisseur (20), d'une lampe (12), de tel sorte que le dispositif de refroidissement présente un évidement d'entrée de fluide réfrigérant (14) et un évidement de sortie de fluide réfrigérant (16), qui sont prévus sur les tronçons d'extrémité opposés du récipient de lampe (10) à l'intérieur ou à proximité de l'évidement dans le boîtier de réflecteur (2), **caractérisé en ce que** la section de l'évidement d'entrée de fluide réfrigérant (14) et de l'évidement de sortie de fluide réfrigérant (16) présente à chaque fois la forme d'un tronçon annulaire.

2. Système de lampe selon la revendication 1, chaque tronçon annulaire s'étendant sur un angle d'environ 180° autour du récipient de lampe (10).

3. Système de lampe selon l'une quelconque des revendications précédentes, l'évidement d'entrée de fluide réfrigérant (14) et l'évidement de sortie de fluide réfrigérant (16) étant reliés l'un à l'autre à l'extérieur du boîtier de réflecteur (2) au moyen d'une pompe (24) et d'au moins un échangeur de chaleur (22a, 22b).

4. Système de lampe selon la revendication 3, une ouverture (4) disposée par rapport à l'évidement dans le boîtier de réflecteur (2) sur le tronçon d'extrémité opposé du boîtier de réflecteur étant fermée par une vitre avant (6).

5. Système de lampe selon l'une quelconque des revendications 1 ou 2, une pompe (46, 48) et un piège de refroidissement respectif pour la condensation de composants sortants étant attribués à l'évidement d'entrée de fluide réfrigérant (14) et à l'évidement de sortie de fluide réfrigérant (16) à l'extérieur du boîtier de réflecteur.

6. Système de lampe selon l'une quelconque des revendications précédentes, l'évidement d'entrée de fluide réfrigérant (14) et l'évidement de sortie de fluide réfrigérant (16) étant disposés, dans la position de montage, respectivement au-dessus du récipient de lampe et au-dessous du récipient de lampe.

7. Système de lampe selon l'une quelconque des revendications précédentes, l'évidement d'entrée de fluide réfrigérant (14) et l'évidement de sortie de fluide réfrigérant (16) présentant chacun une buse (14, 16).

8. Système de lampe selon l'une quelconque des revendications précédentes, la lampe (12) étant une lampe de décharge à haute pression.
